# FASCICULE DE BREVET EUROPEEN

(11) **EP 1 550 874 B1**
(45) Date de publication et mention de la délivrance du brevet: **06.01.2010**
(21) Numéro de dépôt: 04292823.4
(22) Date de dépôt: 30.11.2004
(51) Int. Cl.: G01P 15/08, G01P 15/12

(54) **Accéléromètre thermique à sensibilité réduite à un champ magnétique externe**
Thermischer Beschleunigungssensor mit reduzierter Empfindlichkeit gegenüber einem externen magnetischen Feld
Thermal accelerometer with reduced sensitivity to an external magnetic field

(30) Priorité: 22.12.2003 FR 0315135
(43) Date de publication de la demande: 06.07.2005
(73) Titulaire: Sagem Défense Sécurité, 75015 Paris (FR)
(72) Inventeur: Boyer, Alain, 34095 Montpellier Cedex 5 (FR); Renault, Alain, 95300 Pontoise (FR); Varusio, Bernard, 95150 Taverny (FR); Giani, Alain, 34095 Montpellier Cedex 5 (FR)
(74) Mandataire: Fruchard, Guy

(56) Documents cités:
- EP-A- 0 664 456
- FR-A- 2 817 351
- US-B1- 6 453 571
- LEUNG A M ET AL: "Micromachined accelerometer based on convection heat transfer" 25 janvier 1998 (1998-01-25), MICRO ELECTRO MECHANICAL SYSTEMS, 1998. MEMS 98. PROCEEDINGS., THE ELEVENTH ANNUAL INTERNATIONAL WORKSHOP ON HEIDELBERG, GERMANY 25-29 JAN. 1998, NEW YORK, NY, USA,IEEE, US, PAGE(S) 627-630 , XP010270268 ISBN: 0-7803-4412-X * page 627, colonne 2, alinéas 2,3; figure 2 *

## Description

La présente invention concerne un accéléromètre thermique.

### ARRIERE PLAN DE L'INVENTION

On connaît des accéléromètres thermiques comportant une enceinte dans laquelle est disposé un filament central relié à un organe d'alimentation délivrant un courant électrique et encadré par deux filaments détecteurs reliés à un organe de comparaison d'une température des filaments détecteurs. Lors de l'utilisation de l'accéléromètre pour mesurer l'accélération à laquelle est soumis un engin portant l'accéléromètre, le filament central est porté à une température élevée en utilisant un courant d'alimentation continu. Le gradient de température autour du filament central est fonction de l'accélération à laquelle l'accéléromètre est soumis. Une mesure d'un écart de température entre les filaments détecteurs permet donc de calculer l'accélération à laquelle l'accéléromètre est soumis. Pour un bon fonctionnement de l'électronique de calcul il est connu d'alimenter les filaments détecteurs en courant alternatif. Le filament central n'est pas concerné par cette contrainte de précision, ce qui explique son alimentation en courant continu.

Par ailleurs, afin d'augmenter la vitesse et la précision de la détermination de l'accélération il a été proposé dans le document FR-A-2 817 351 de disposer, de façon adjacente aux filaments détecteurs, des filaments de réaction reliés à des organes d'alimentation délivrant aux filaments de réaction des courants électriques de réaction continus, ou impulsionnels, de même signe. Dans ce cas un filament de réaction est alimenté de façon à équilibrer l'écart de température entre les filaments de détection et la mesure de l'accélération est effectuée en mesurant la puissance nécessaire pour effectuer cet équilibrage.

Dans un cas comme dans l'autre on a observé des erreurs de mesure inexpliquées dans des conditions où l'accéléromètre était soumis aux mêmes accélérations.

### OBJET DE L'INVENTION

Un but de l'invention est de minimiser les erreurs de mesure des dispositifs antérieurs.

### BREVE DESCRIPTION DE L'INVENTION

En vue de la réalisation de ce but, on propose selon l'invention un accéléromètre thermique comportant une enceinte dans laquelle est disposé un filament central relié à un organe d'alimentation délivrant un courant électrique, et encadré par deux filaments détecteurs reliés à un organe de comparaison d'une température des filaments détecteurs, dans lequel le courant électrique délivré au filament central est un courant alternatif de valeur moyenne nulle ayant une fréquence supérieure à un premier mode de vibration propre du filament central.

Selon une observation faisant partie de l'invention, on a en effet constaté que des erreurs provenaient de la déformation parasite du filament central due à des forces électromagnétiques sous l'effet d'un champ magnétique externe continu ou basse fréquence lorsque le filament central est alimenté par un courant continu. L'alimentation du filament central avec un courant alternatif à valeur moyenne nulle et d'une fréquence suffisamment élevée permet d'obtenir une réduction sensible des déformations du filament central sous l'effet du champ magnétique externe de sorte que les erreurs correspondantes sont éliminées.

Selon une version avantageuse de l'invention le courant alternatif a une fréquence comprise entre le premier mode de vibration propre du filament central et le deuxième mode de vibration propre du filament central.

Selon un autre aspect avantageux de l'invention dans le cas d'un accéléromètre thermique comportant également des filaments de réaction, les filaments de réaction sont alimentés avec un courant électrique de réaction à valeur moyenne nulle ayant une fréquence supérieure à un premier mode de vibration propre définie. On obtient ainsi les mêmes effets de réduction d'erreur que pour le filament central.

### BREVE DESCRIPTION DES DESSINS.

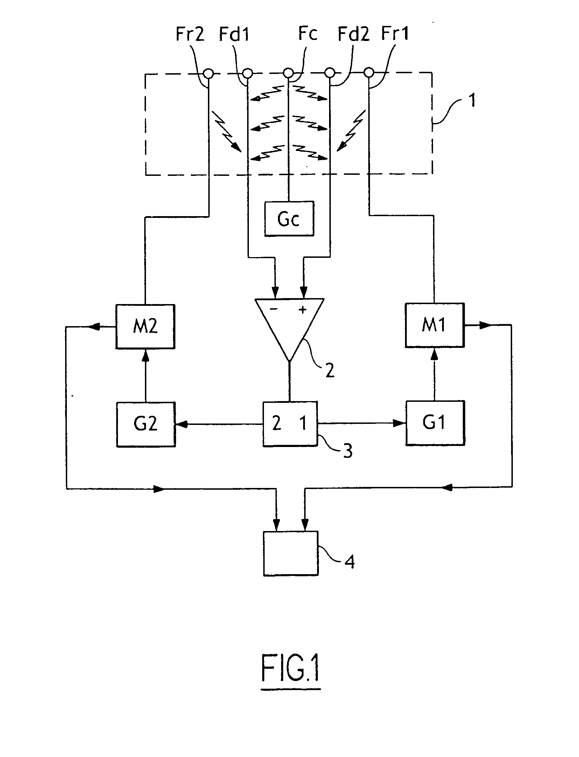

D'autres caractéristiques et avantages de l'invention ressortiront à la lecture de la description qui suit d'un mode de réalisation préférée non limitatif de l'invention en relation avec la figure unique ci-jointe qui est une illustration schématique d'un accéléromètre thermique auquel l'invention s'applique.

### DESCRIPTION DETAILLEE DE L'INVENTION

En référence à la figure, l'accéléromètre thermique comporte de façon connue en soi, notamment du document précité, une enceinte 1 dans laquelle est disposé un filament central Fc encadré par deux filaments détecteurs Fd1 et Fd2 auxquels sont respectivement accolés des filaments de réactions Fr2 et Fr1. Le filament Fc a une extrémité reliée à un organe d'alimentation Gc. Les filaments détecteurs Fd1 et Fd2 sont reliés aux entrées d'un comparateur 2 dont la sortie est reliée à un sélecteur 3 servant à commander des organes d'alimentation G1 et G2 respectivement reliés aux filaments de réaction Fr1 et Fr2 par l'intermédiaire d'organes de mesure M1 et M2 eux-mêmes reliés à un organe de calcul de l'accélération 4. Le fonctionnement général de l'accéléromètre est connu du document précité.

Selon l'invention le courant électrique délivré au filament central Fc est un courant alternatif à valeur moyenne nulle ayant une fréquence de préférence comprise entre le premier mode et le deuxième mode de vibration propre du filament central Fc. En pratique pour assurer une indépendance des mesures effectuées par l'accéléromètre par rapport aux vibrations auxquelles est soumis le support de l'accéléromètre le premier mode de vibration propre du filament central est de l'ordre de 6 kHz de sorte que le deuxième mode de vibration propre du filament central est de l'ordre de 12 Khz. Dans ce cas le filament central est de préférence alimenté avec un courant ayant une fréquence de l'ordre de 10 kHz. On notera à ce propos que le courant d'alimentation alternatif peut être un courant sinusoïdal dans le cas d'un fonctionnement analogique de l'accéléromètre ou un courant impulsionnel dans le cas d'un fonctionnement numérique de l'accéléromètre.

De même, dans le mode de réalisation préféré illustré les filaments de réaction (Fr1) et (Fr2) sont alimentés avec un courant électrique de réaction alternatif de valeur moyenne nulle ayant une fréquence supérieure au premier mode de vibration propre des filaments de réaction et de préférence comprise entre le premier et le deuxième mode de vibration propre des filaments de réaction.

Bien entendu l'invention n'est pas limitée au mode de réalisation décrit et on peut y apporter des variantes de réalisation sans sortir du cadre de l'invention tel que défini par les revendications.

En particulier bien que l'accéléromètre selon l'invention ait été décrit en relation avec un mode de réalisation comportant des filaments de réaction, l'invention peut être mise en oeuvre dans un accéléromètre comportant seulement un filament central et des filaments détecteurs.

## Revendications

1. Accéléromètre thermique comportant une enceinte (1) dans laquelle est disposé un filament central (Fc) relié à un organe d'alimentation (Gc) délivrant un courant électrique, et encadré par deux filaments détecteurs (Fd1, Fd2) reliés à un organe de comparaison (2) d'une température des filaments détecteurs **caractérisé en ce que** le courant électrique délivré au filament central (Fc) est un courant alternatif à valeur moyenne nulle ayant une fréquence supérieure à un premier mode de vibration du filament central (Fc).

2. Accéléromètre selon la revendication 1 est **caractérisé en ce que** le courant alternatif a une fréquence comprise entre le premier mode de vibration propre du filament central (Fc) et un deuxième mode de vibration propre du filament central (Fc).

3. Accéléromètre selon la revendication 1 comportant des filaments de réaction (Fr1, Fr2) adjacents aux filaments détecteurs (Fdl, Fd2), les filaments de réaction étant reliés à des organes d'alimentation (Gl, G2) délivrant un courant électrique de réaction **caractérisé en ce que** le courant électrique de réaction est un courant alternatif à valeur moyenne nulle ayant une fréquence supérieure à un premier mode de vibration des filaments de réaction (Frl, Fr2).

4. Accéléromètre selon la revendication 3 **caractérisé en ce que** le courant alternatif de réaction a une fréquence comprise entre le premier mode de vibration propre des filaments de réaction (Frl, Fr2) et un deuxième mode de réaction des filaments de réaction.

## Claims

1. A thermal accelerometer comprising an enclosure (1) having disposed therein a central filament (Fc) connected to a power supply member (Gc) delivering electric current, and disposed between two detector filaments (Fdl, Fd2) connected to a member (2) for comparing the temperatures of the detector filaments, the accelerometer being **characterized in that** the electric current delivered to the central filament (Fc) is alternating current of zero mean amplitude and having a frequency greater than a first resonant mode of vibration of the central filament (Fc).

2. An accelerometer according to claim 1, **characterized in that** the alternating current is at a frequency lying between the first resonant mode of vibration of the central filament (Fc) and a second resonant mode of vibration of the central filament (Fc).

3. An accelerometer according to claim 1, including reaction filaments (Frl, Fr2) adjacent to the detector filaments (Fdl, Fd2), the reaction filaments being connected to power supply members (Gl, G2) delivering reaction electric current, the accelerometer being **characterized in that** the reaction electric current is alternating current at a zero mean amplitude and having a frequency greater than a first resonant mode of vibration of the reaction filaments (Frl, Fr2).

4. An accelerometer according to claim 3, **characterized in that** the reaction alternating current has a frequency lying between the first resonant mode of vibration of the reaction filaments (Frl, Fr2), and a second resonant mode of vibration of the reaction filaments.

## Patentansprüche

1. Thermischer Beschleunigungsmesser, umfassend ein Gehäuse (1), in dem ein zentraler Draht (Fc) angeordnet ist, der mit einem einen elektrischen Strom liefernden Versorgungselement (Gc) verbunden und von zwei Detektionsdrähten (Fdl, Fd2) umrahmt ist, die mit einem Vergleichselement (2) zum Vergleichen einer Temperatur der Detektionsdrähte verbunden sind, **dadurch gekennzeichnet, dass** der dem zentralen Draht (Fc) zugeführte elektrische Strom ein Wechselstrom mit einem Nullmittelwert ist, der eine Frequenz hat, die größer als eine erste Schwingungsmode des zentralen Drahtes (Fc) ist.

2. Beschleunigungsmesser nach Anspruch 1, **dadurch gekennzeichnet, dass** der Wechselstrom eine Frequenz hat, die zwischen der ersten Eigenschwingungsmode des zentralen Drahtes (Fc) und einer zweiten Eigenschwingungsmode des zentralen Drahtes (Fc) liegt.

3. Beschleunigungsmesser nach Anspruch 1, umfassend Reaktionsdrähte (Fr1, Fr2), die an die Detektionsdrähte (Fdl, Fd2) angrenzen, wobei die Reaktionsdrähte mit Versorgungselementen (G1, G2) verbunden sind, die einen Reaktionsstrom liefern, **dadurch gekennzeichnet, dass** der Reaktionsstrom ein Wechselstrom mit Nullmittelwert ist, der eine Frequenz hat, die größer als eine erste Schwingungsmode der Reaktionsdrähte (Frl, Fr2) ist.

4. Beschleunigungsmesser nach Anspruch 3, **dadurch gekennzeichnet, dass** der Reaktionswechselstrom eine Frequenz hat, die zwischen der ersten Eigenschwingungsmode der Reaktionsdrähte (Fr1, Fr2) und einer zweiten Reaktionsmode der Reaktionsdrähte liegt.
